# EUROPEAN PATENT SPECIFICATION

(11) **EP 4 485 589 B1**
(45) Date of publication and mention of the grant of the patent: **01.04.2026**
(21) Application number: 24173015.9
(22) Date of filing: 29.04.2024
(51) Int. Cl.: H01M 8/0228, H01M 8/0245, H01M 8/021, H01M 8/0232, H01M 8/0258, H01M 8/12

(54) **FABRICATION OF INTEGRATED METAL SUPPORT FOR HIGH POWER DENSITY SOLID OXIDE FUEL CELL**
HERSTELLUNG EINES INTEGRIERTEN METALLTRÄGERS FÜR EINE FESTOXIDBRENNSTOFFZELLE MIT HOHER LEISTUNGSDICHTE
FABRICATION D'UN SUPPORT MÉTALLIQUE INTÉGRÉ POUR PILE À COMBUSTIBLE À OXYDE SOLIDE À HAUTE DENSITÉ DE PUISSANCE

(30) Priority: 27.06.2023 US 202318342028
(43) Date of publication of application: 01.01.2025
(73) Proprietor: Hamilton Sundstrand Space Systems International, Inc., Windsor Locks, CT 06096 (US)
(72) Inventor: TIANLI, Zhu, Glastonbury, CT, 06033 (US); SHARON, John A., West Hartford, CT, 06119, (US); VENTURA, Anthony Patrick, Glastonbury, CT, 06033, (US); EMERSON, Sean C., Broad Brook, 06016 (US); DARDAS, Zissis A., Worcester, 01602 (US); ZHANG, Weilong, Glastonbury, CT, 06033 (US)
(74) Representative: Dehns

(56) References cited:
- EP-A1- 3 905 399
- CN-A- 101 718 743
- CN-A- 116 130 697

## Description

### STATEMENT OF FEDERAL SUPPORT

This invention was made with government support under U.S. Government Contract No. DE-EE0008080 awarded by the Department of Energy. The U.S. Government has certain rights in the invention.

### BACKGROUND

The invention relates to fuel cell configurations having high power density for use in, for example, aircraft applications.

The increased use of electrical power in aircraft systems and propulsion requires advanced electrical storage systems and/or a chemical to electrical power conversion system to generate adequate amounts of electrical power. Both high system efficiency and high power density of the conversion system are required.

Fuel cell-based power systems, such as solid oxide fuel cell (SOFC)-based power systems, are able to achieve electrical efficiencies of 60% or greater. Further, SOFC power systems can operate with a variety of fuels and are scalable to achieve different power levels. Current, state of the art SOFC systems, however, have relatively low power densities of below 500 watts per kilogram, and relatively slow startup times typically exceeding 30 minutes. For aircraft and aerospace applications, increased power densities and reduced startup times are required. Methods of manufacturing SOFCs are disclosed in EP 3 905 399 A1, CN 116 130 697 A and CN 101 718 743 A.

### BRIEF DESCRIPTION

In one aspect, a method of forming a fuel cell layer is provided as defined by claim 1.

In embodiments a catalyst layer is interposed between the support layer and the separator plate.

In embodiments the securing is performed at a temperature in the range of less than or equal to 1000 degrees Celsius.

In embodiments the securing is performed at a pressure in the range of 5 to 100 Megapascals.

In embodiments the porous portion of the support layer is formed by laser drilling.

In embodiments anode, electrolyte and cathode layers are applied to the support layer.

In embodiments at least one of the anode, electrolyte and cathode are formed as tape casted ceramic layers.

In embodiments one or more of the anode, electrolyte and cathode are secured via one of a FAST or spark plasma sintering process.

In embodiments a thin conductive layer having a thickness in the range of 5 micrometers to 1 millimeter is applied to the support layer. The thin conductive layer is formed primarily of elements from groups 7-12 of the periodic table.

In embodiments the thin conductive layer is one of a nickel or nickel alloy.

In embodiments the thin conductive layer is applied via one of electroplating, atomic layer deposition, sputtering, or physical vapor deposition.

In embodiments the thin conductive layer is applied prior to securing the support layer to the separator plate.

In embodiments at least one of the separator plate or the support layer are formed from a stainless steel material.

In another aspect, a fuel cell layer of a multi-layer fuel cell, is provided as defined by claim 14.

In embodiments a thin conductive layer is applied to the support layer having a thickness in the range of 5 micrometers to 1 millimeter. The thin conductive layer formed primarily of elements from groups 7-12 of the periodic table, and is applied via one of electroplating, atomic layer deposition, sputtering, or physical vapor deposition.

### BRIEF DESCRIPTION OF THE DRAWINGS

The following descriptions should not be considered limiting in any way. With reference to the accompanying drawings, like elements are numbered alike:
FIG. 1 is a schematic illustration of an embodiment of a solid oxide fuel cell;
FIG. 2 is a schematic illustration of an embodiment of a fuel cell having a multilayer structure;
FIG. 3 is a schematic illustration of an embodiment of a fuel cell layer;
FIG. 4 is another schematic illustration of an embodiment of a fuel cell layer;
FIG. 5 is a partially exploded view of an embodiment of a fuel cell layer; and
FIG. 6 is a schematic illustration of a method of forming a multi-layer fuel cell.

### DETAILED DESCRIPTION

A detailed description of one or more embodiments of the disclosed apparatus and method are presented herein by way of exemplification and not limitation with reference to the Figures.

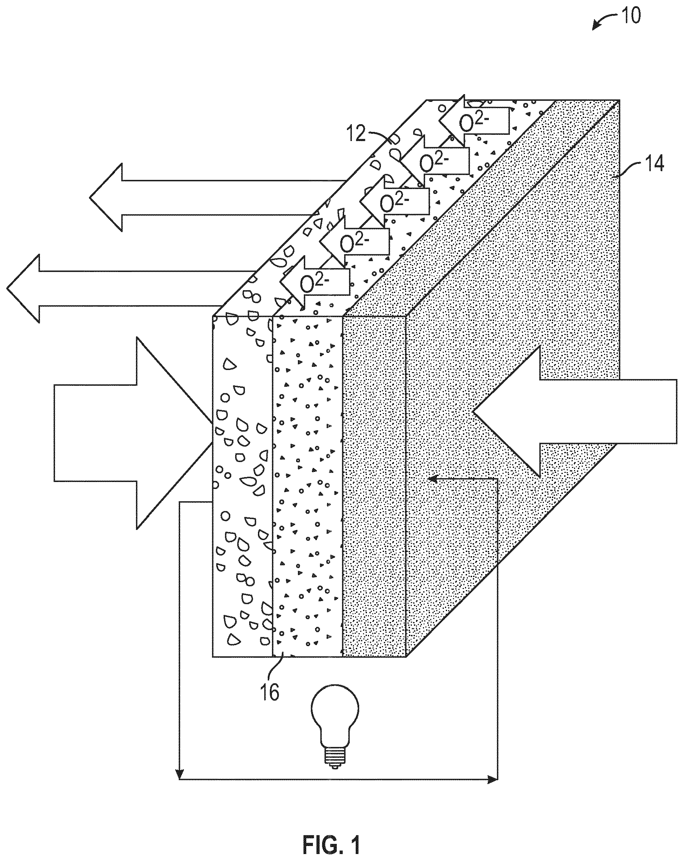

Referring to FIG. 1, shown is a schematic illustration of an embodiment of a fuel cell (10). In some embodiments, the fuel cell 10 is a solid oxide fuel cell, a proton conducting fuel cell, an electrolyzer, or other fuel cell apparatus. The fuel cell 10 includes an anode 12 and a cathode 14 with an electrolyte 16 disposed between the anode 12 and the cathode 14. In the case of the solid oxide fuel cell 10, the electrolyte 16 is a solid oxide material such as, for example, a ceramic material. A flow of fuel is introduced to the fuel cell 10 along with a flow of air. Chemical reactions of the fuel fed to the anode 12 and air fed to the cathode 14, passing charged species, such as protons, through the electrolyte 16 produces electricity. In some embodiments, an operating temperature of the fuel cell 10 is in the range of 400-900 degrees Celsius, while in other embodiments the operating temperature is in the range of 400-750 degrees Celsius. The flow of fuel may comprise, for example, natural gas, coal gas, biogas, hydrogen, or other fuels such as jet fuel.

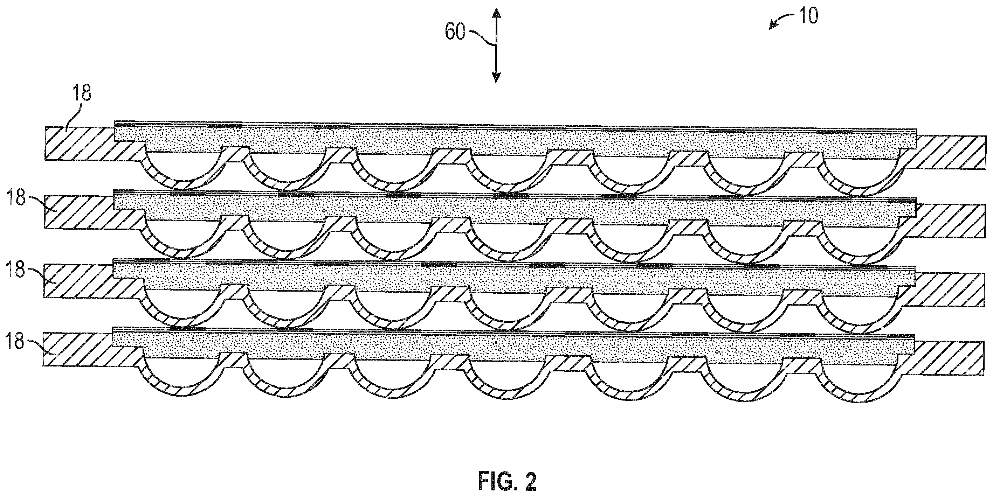

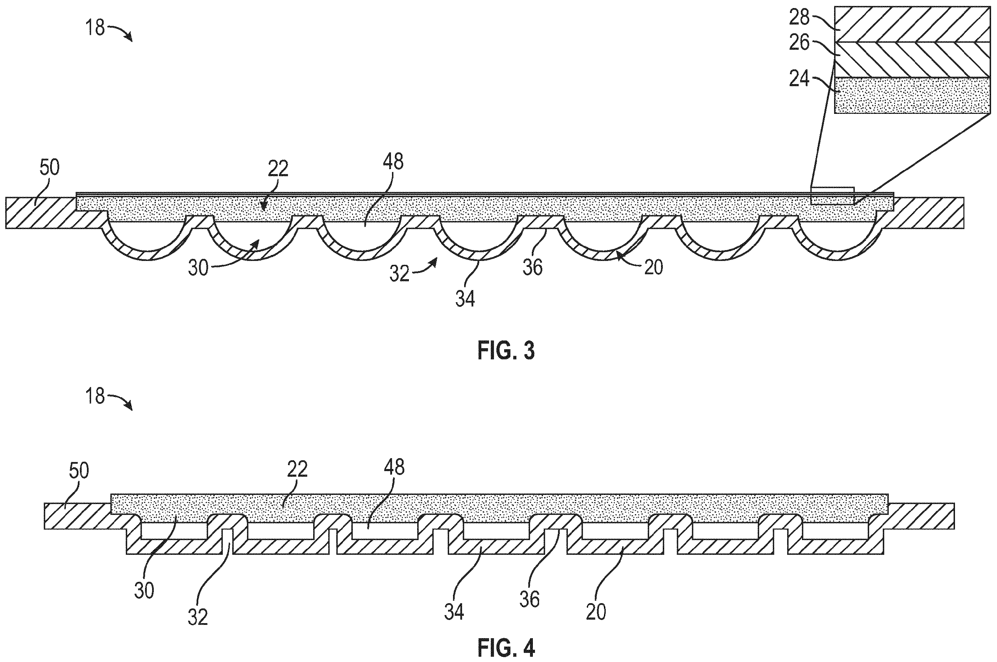

Referring now to FIG. 2, the fuel cell 10 includes a plurality of fuel cell layers 18 stacked along a stacking axis 60. In some embodiments, each fuel cell layer 18 has a rectangular shape. It is to be appreciated, however, that the fuel cell layers 18 may have other polygonal shapes or may be, for example, circular, elliptical or oval in shape. As shown in FIG. 3, each fuel cell layer 18 includes a separator plate 20 and a support 22 located over the separator plate 20 with the support 22 secured to the separator plate 20. Joining the support 22 to the separator plate 20 increases their individual strength and rigidity, and allows for using thinner, lighter materials in forming the support 22 and the separator plate 20 than would be otherwise feasible. An anode 24, electrolyte 26 and a cathode 28 are stacked atop the support 22 in that order. In some embodiments, the electrolyte 26 is formed from a solid oxide material, such as a ceramic material. The fuel cell layers 18 are stacked such that the cathode 28 contacts the separator plate 20 of the neighboring fuel cell layer 18.

The separator plate 20 is compliant and lightweight and is shaped to define a plurality of anode flow channels 30 and a plurality of cathode flow channels 32 and separate the anode flow channels 30 from the cathode flow channels 32. The plurality of anode flow channels 30 are defined at a first side of the separator plate 20 and the plurality of cathode flow channels 32 are defined at a second side of the separator plate 20 opposite the first side. As illustrated the anode flow channels 30 and the cathode flow channels 32 at least partially overlap along the stacking axis 60. This improves a density of the fuel cell 10 along the stacking axis 60.

Compliance of the separator plate 20 ensures good contact with the cathode 28 for high performance, and the separator plate 20 is configured for light weight to enable high power density of the fuel cell 10. The fuel flows through the anode flow channels 30 and the air flows through the cathode flow channels 32. In some embodiments, such as in FIG. 3, the separator plate 20 includes a plurality of curved portions 34 separated by flat support portions 36, with the support portions 36 interfacing with the support 22 and curved portions 34 contacting the cathode 28 of the neighboring fuel cell layer 18. The waveform shape of the separator plate 20 with the plurality of curved portions 34 allows for greater levels of fuel flow coverage to the anode 24 and a greater level of airflow coverage to the cathode 28. In other embodiments, the curved portions 34 may have other shapes, such as rectilinear as shown in FIG. 4. The shapes illustrated in FIGs. 3 and 4 are merely exemplary, with the shapes of anode flow channels 30 and cathode flow channels 32 selected to provide the desired compliance in the stacking axis 60 direction, while allowing for selected anode and cathode flows which may be at significantly different flow rates. The separator plate 20 may be formed from corrugated sheet stock with features on the order of millimeters to centimeters. Alternatively, the separator plate 20 may be formed from sheet material by, for example, stamping, extrusion, folding, bending, roll forming, hydroforming, or the like. Other methods may include injection molding, additive manufacturing including laser powder bed fusion, electron beam melting, directed energy deposition, or laminated object manufacture. In still other embodiments, the separator plate may be formed at least partially by a process such as ultraviolet lithography and etching which may be used to form features with a resolution below 10 microns, or by micro-EDM (electrical discharge machining) or laser micromachining, both of which that may be utilized to produce features with a resolution in the range of 50 to 100 microns. In some embodiments, the separator plate 20 is formed from a stainless steel or titanium material.

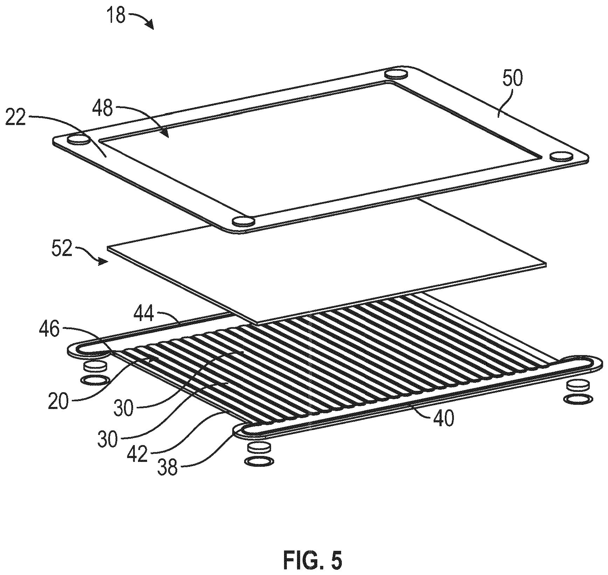

Referring again to FIG. 3 and also to the partially exploded view of FIG. 5, fuel is distributed to the anode fuel channels 30 via a primary manifold 38 and a secondary manifold 40. The primary manifold 38 extends between the fuel cell layers 18 to distribute fuel to each fuel cell layer 18 of the plurality of fuel cell layers 18. Each fuel cell layer 18 includes a secondary manifold 40 located at, for example, a first end 42 of the anode flow channels 30. The secondary manifold 40 is connected to the primary manifold 38 and the plurality of anode flow channels 30 to distribute fuel from the primary manifold 38 to each of the anode flow channels 30 of the fuel cell layer 18. The anode flow channels 30 extend from the secondary manifold 40 at the first end 42 of the anode flow channels 30 to a collection manifold 44 at a second end 46 of the anode flow channels 30. Fuel flows from the primary manifold 38 through the secondary manifold 40, and through the anode flow channels 30 with anode byproducts such as water vapor and carbon dioxide exiting the anode flow channels 30 and flowing into the collection manifold 44.

The support layer 22 is formed from a metal material in some embodiments, and includes a porous section 48 and a non-porous or solid section 50, with the solid section 50 surrounding the porous section 48 and defining an outer perimeter of the support layer 22. The porous section 48 may be formed by, for example, laser drilling of a metal sheet. or sintering of metal powder, or additive manufacturing. The porous section 48 is located over the anode flow channels 30 to allow the fuel flow to reach the anode 24 through the porous section 48. In some embodiments, a metal catalyst foam layer 52 is located between the separator plate 20 and the support layer 22.

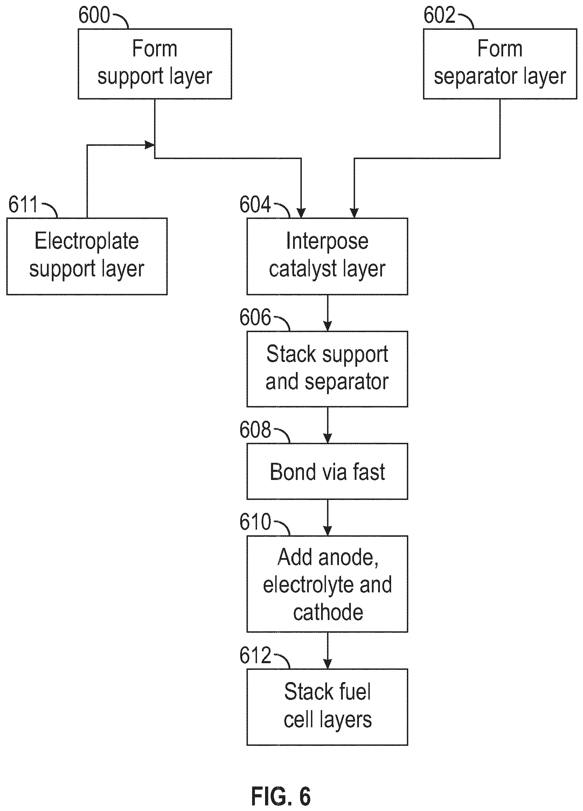

Referring now to FIG. 6, illustrated is a method of forming a unitary separator plate 20 and support layer 22. At step 600, the support layer 22 is formed by, for example, laser drilling of a metal sheet to define a desired porous section 48 and solid section 50. In some embodiments, the support layer 22 is formed from a ferrous metal such as stainless steel. At step 602, the separator plate 20 is formed as a corrugated sheet with the desired curved portions 34 and support portions 36. The separator plate 20 may include a border portion along at least one side of the separator plate 20 which is not corrugated and is absent of the curved portions. In some embodiments, the separator plate 20 is also formed from a ferrous metal such as stainless steel. The separator plate 20 is relatively compliant to ensure good contact with the cathode 28 of the adjacent layer, and is relatively light weight to enable a high power density of the fuel cell 10. In some embodiments, at step 604, the metal catalyst foam layer 52 is placed between the separator plate 20 and the support layer 22, and at step 606 the support layer 22 is stacked onto the separator plate 20, with the solid section 50 of the support layer 22 aligned with the border portion of the separator plate 20. At step 608, the support layer 22 is bonded to the separator plate 20 via a field assisted sintering technology (FAST) process, also known as spark plasma sintering or direct current sintering. The FAST process is performed at an elevated temperature, for example, a temperature less than 1000 degrees Celsius, or in some embodiments in the range of 800 -1000 degrees Celsius. The FAST process is also performed at an elevated pressure in the range of 5 - 100 MPa, or in some embodiments in the range of 10 -40 MPa, and with a dwell time in the range of 1 - 30 minutes. This secures the support layer 22 to the separator plate 20.

Referring to FIG. 3 with continued reference to FIG. 6, the anode 24, electrolyte 26 and the cathode 28 are stacked atop the support layer 22 at step 610. In some embodiments, the anode 24, electrolyte 26 and the cathode 28 are formed as tape casted ceramic layers and secured to the support layer 22 via, for example, sintering or FAST. In one embodiment, the anode 24, electrolyte 26 and the cathode 28 may be secured in place via the same FAST process used to secure the support layer 22 to the separator plate 20. In some embodiments, at step 611 the support layer 22 is electroplated with a thin conductive layer, having a thickness in the range of 5 micrometers to 1 millimeter, prior to FAST. The thin conductive layer primarily includes elements from groups 7-12 of the periodic table, which in some embodiments is a nickel or nickel alloy material. The electroplating is utilized to prevent Cr scale formation between the anode 24 and the support layer 22. In other embodiments, the thin conductive layer may be applied via atomic layer deposition (ALD), sputtering, or physical vapor deposition (PVD).

The separator plate 20, support layer 22, anode 24, electrolyte 26 and cathode 28 assembled as above define a repeating layer unit. These repeating units, or fuel cell layers 18, are then stacked in step 612 along the stacking axis 60 as illustrated in FIG. 2 to define the fuel cell 10.

The fuel cell 10 configurations disclosed herein enable a high performance electrical power system for, for example, an aircraft, especially for long duration operation. The configurations further reduce startup times and provide power densities in the range of 1-3 kilowatts/kilogram with a cell performance of≥0.8 W/cm². Further, the improved power density may be achieved utilizing a lightweight separator plate 20, with a separator plate 20 formed from, for example, stainless steel having a thickness of 2 mil to 10 mil. Further, other materials such as titanium alloys, or other materials at lower operating temperatures may be used to form a lightweight separator plate 20.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of forming a fuel cell layer, comprising:
forming a separator plate (20) including a plurality of corrugations defining a plurality of anode flow channels (30) at a first side of the separator plate and a plurality of cathode flow channels (32) at a second side of the separator plate opposite the first side;
forming a support layer (22), the support layer including a porous portion and a solid portion at least partially surrounding the porous portion;
stacking the support layer and the separator plate; and **characterised by**:
securing the support layer to the separator plate via a field-assisted sintering or spark plasma sintering, FAST, process.

2. The method of claim 1, further comprising interposing a catalyst layer between the support layer and the separator plate.

3. The method of claim 1 or 2, further comprising performing the securing at a temperature in the range of less than or equal to 1000 degrees Celsius.

4. The method of any preceding claim, further comprising performing the securing at a pressure in the range of 5 to 100 Megapascals.

5. The method of any preceding claim, wherein the porous portion of the support layer is formed by laser drilling.

6. The method of any preceding claim, further comprising applying anode, electrolyte and cathode layers to the support layer.

7. The method of claim 6, wherein at least one of the anode, electrolyte and cathode are formed as tape casted ceramic layers.

8. The method of claim 6 or 7, further comprising securing one or more of the anode, electrolyte and cathode via one of a FAST or spark plasma sintering process.

9. The method of any preceding claim, further comprising applying a thin conductive layer having a thickness in the range of 5 micrometers to 1 millimeter to the support layer, the thin conductive layer formed primarily of elements from groups 7-12 of the periodic table, and optionally wherein the thin conductive layer is one of a nickel or nickel alloy.

10. The method of claim 9, further comprising applying the thin conductive layer via one of electroplating, atomic layer deposition, sputtering, or physical vapor deposition.

11. The method of claim 9 or 10, further comprising applying the thin conductive layer prior to securing the support layer to the separator plate.

12. The method of any preceding claim, wherein at least one of the separator plate or the support layer are formed from a stainless steel material.

13. A method of forming a stacked solid oxide fuel cell, comprising:
forming a plurality of fuel cell layers (18) according to the method of any preceding claim; and
stacking the plurality of fuel cell layers along a stacking axis.

14. A fuel cell layer of a multi-layer fuel cell, comprising:
a cathode (14);
an anode (12);
an electrolyte (16) disposed between the anode and the cathode;
a support layer (22) disposed at the anode opposite the electrolyte;
a separator plate (20) disposed at the support layer opposite the anode, the support layer configured to contact the cathode of an adjacent fuel cell layer, the separator plate defining a plurality of anode flow channels (30) configured to deliver a fuel therethrough and a plurality of cathode flow channels (32) configured to deliver an air flow therethrough;
**characterised in that** the support layer is secured to the separator plate via a field-assisted sintering or spark plasma sintering, FAST, process.

15. The fuel cell layer of claim 14, further comprising a thin conductive layer applied to the support layer having a thickness in the range of 5 micrometers to 1 millimeter, the thin conductive layer formed primarily of elements from groups 7-12 of the periodic table, the thin conductive layer applied via one of electroplating, atomic layer deposition, sputtering, or physical vapor deposition.

## Patentansprüche

1. Verfahren zum Bilden einer Brennstoffzellenschicht, umfassend:
Bilden einer Separatorplatte (20), die eine Vielzahl von Riffelungen einschließt, die eine Vielzahl von Anodenströmungskanälen (30) an einer ersten Seite der Separatorplatte und eine Vielzahl von Kathodenströmungskanälen (32) an einer zweiten Seite der Separatorplatte gegenüber der ersten Seite definieren;
Bilden einer Trägerschicht (22), wobei die Trägerschicht einen porösen Abschnitt und einen massiven Abschnitt, der den porösen Abschnitt zumindest teilweise umgibt, einschließt;
Stapeln der Trägerschicht und der Separatorplatte; und **dadurch gekennzeichnet, dass**:
die Trägerschicht an der Separatorplatte über einen feldunterstützten Sinter- oder Spark-Plasma-Sinter-, FAST-, Prozess befestigt wird.

2. Verfahren nach Anspruch 1, ferner umfassend Einfügen einer Katalysatorschicht zwischen die Trägerschicht und die Separatorplatte.

3. Verfahren nach Anspruch 1 oder 2, ferner umfassend Durchführen des Befestigens bei einer Temperatur in dem Bereich von weniger als oder gleich 1000 Grad Celsius.

4. Verfahren nach einem der vorhergehenden Ansprüche, ferner umfassend Durchführen des Befestigens bei einem Druck in dem Bereich von 5 bis 100 Megapascal.

5. Verfahren nach einem der vorhergehenden Ansprüche, wobei der poröse Abschnitt der Trägerschicht durch Laserbohren gebildet wird.

6. Verfahren nach einem der vorhergehenden Ansprüche, ferner umfassend Aufbringen von Anoden-, Elektrolyt- und Kathodenschichten auf die Trägerschicht.

7. Verfahren nach Anspruch 6, wobei mindestens eines von der Anode, dem Elektrolyten und der Kathode als foliengegossene Keramikschichten gebildet ist.

8. Verfahren nach Anspruch 6 oder 7, ferner umfassend Befestigen von einem oder mehreren von der Anode, dem Elektrolyten und der Kathode über einen von einem FAST- oder Spark-Plasma-Sinter-Prozess.

9. Verfahren nach einem der vorhergehenden Ansprüche, ferner umfassend Aufbringen einer dünnen leitfähigen Schicht mit einer Dicke in dem Bereich von 5 Mikrometern bis 1 Millimeter auf die Trägerschicht, wobei die dünne leitfähige Schicht primär aus Elementen der Gruppen 7-12 des Periodensystems gebildet ist, und wobei optional die dünne leitfähige Schicht eines von einem Nickel oder einer Nickellegierung ist.

10. Verfahren nach Anspruch 9, ferner umfassend Aufbringen der dünnen leitfähigen Schicht über eines von Galvanisieren, Atomlagenabscheidung, Sputtern oder physikalischer Gasphasenabscheidung.

11. Verfahren nach Anspruch 9 oder 10, ferner umfassend Aufbringen der dünnen leitfähigen Schicht vor dem Befestigen der Trägerschicht an der Separatorplatte.

12. Verfahren nach einem der vorhergehenden Ansprüche, wobei mindestens eines von der Separatorplatte oder der Trägerschicht aus einem Edelstahlmaterial gebildet ist.

13. Verfahren zum Bilden einer gestapelten Festoxidbrennstoffzelle, umfassend:
Bilden einer Vielzahl von Brennstoffzellenschichten (18) gemäß dem Verfahren nach einem der vorhergehenden Ansprüche; und
Stapeln der Vielzahl von Brennstoffzellenschichten entlang einer Stapelachse.

14. Brennstoffzellenschicht einer mehrschichtigen Brennstoffzelle, umfassend:
eine Kathode (14);
eine Anode (12);
einen Elektrolyten (16), der zwischen der Anode und der Kathode angeordnet ist;
eine Trägerschicht (22), die an der Anode gegenüber dem Elektrolyten angeordnet ist;
eine Separatorplatte (20), die an der Trägerschicht gegenüber der Anode angeordnet ist, wobei die Trägerschicht konfiguriert ist, die Kathode einer benachbarten Brennstoffzellenschicht zu kontaktieren, wobei die Separatorplatte eine Vielzahl von Anodenströmungskanälen (30), die konfiguriert sind, einen Brennstoff dort hindurch zu liefern, und eine Vielzahl von Kathodenströmungskanälen (32), die konfiguriert sind, einen Luftstrom dort hindurch zu liefern, definiert;
**dadurch gekennzeichnet, dass** die Trägerschicht über einen feldunterstützten Sinter- oder Spark-Plasma-Sinter-, FAST-, Prozess an der Separatorplatte befestigt ist.

15. Brennstoffzellenschicht nach Anspruch 14, ferner umfassend eine auf die Trägerschicht aufgebrachte dünne leitfähige Schicht mit einer Dicke in dem Bereich von 5 Mikrometern bis 1 Millimeter, wobei die dünne leitfähige Schicht primär aus Elementen der Gruppen 7-12 des Periodensystems gebildet ist, wobei die dünne leitfähige Schicht über eines von Galvanisieren, Atomlagenabscheidung, Sputtern oder physikalischer Gasphasenabscheidung aufgebracht ist.

## Revendications

1. Procédé de formation d'une couche de pile à combustible, comprenant :
la formation d'une plaque séparatrice (20) comportant une pluralité d'ondulations définissant une pluralité de canaux d'écoulement d'anode (30) sur un premier côté de la plaque séparatrice et une pluralité de canaux d'écoulement de cathode (32) sur un second côté de la plaque séparatrice opposé au premier côté ;
la formation d'une couche de support (22), la couche de support comportant une partie poreuse et une partie solide entourant au moins partiellement la partie poreuse ;
l'empilement de la couche de support et de la plaque séparatrice ; et **caractérisé par** :
la fixation de la couche de support à la plaque séparatrice par l'intermédiaire d'un procédé de frittage assisté par champ électrique ou de frittage par plasma d'étincelles, FAST.

2. Procédé selon la revendication 1, comprenant en outre l'interposition d'une couche catalytique entre la couche de support et la plaque séparatrice.

3. Procédé selon la revendication 1 ou 2, comprenant en outre la réalisation de la fixation à une température inférieure ou égale à 1000 degrés Celsius.

4. Procédé selon une quelconque revendication précédente, comprenant en outre la réalisation de la fixation à une pression dans la plage de 5 à 100 mégapascals.

5. Procédé selon une quelconque revendication précédente, dans lequel la partie poreuse de la couche de support est formée par perçage laser.

6. Procédé selon une quelconque revendication précédente, comprenant en outre l'application de couches d'anode, d'électrolyte et de cathode sur la couche de support.

7. Procédé selon la revendication 6, dans lequel au moins l'une de l'anode, de l'électrolyte et de la cathode est formée sous forme de couches céramiques obtenues par coulage en bande.

8. Procédé selon la revendication 6 ou 7, comprenant en outre la fixation de l'une ou de plusieurs de l'anode, de l'électrolyte et de la cathode par l'intermédiaire d'un procédé FAST ou d'un procédé de frittage par plasma d'étincelles.

9. Procédé selon une quelconque revendication précédente, comprenant en outre l'application d'une couche conductrice mince ayant une épaisseur dans la plage de 5 micromètres à 1 millimètre sur la couche de support, ladite couche conductrice mince étant constituée principalement d'éléments des groupes 7 à 12 du tableau périodique, et éventuellement dans lequel ladite couche conductrice mince est constituée de nickel ou d'un alliage de nickel.

10. Procédé selon la revendication 9, comprenant en outre l'application de la couche conductrice mince par l'intermédiaire de l'un de la galvanoplastie, du dépôt par couches atomiques, de la pulvérisation cathodique ou du dépôt physique en phase vapeur.

11. Procédé selon la revendication 9 ou 10, comprenant en outre l'application de la couche conductrice mince avant la fixation de la couche de support à la plaque séparatrice.

12. Procédé selon une quelconque revendication précédente, dans lequel au moins l'une de la plaque séparatrice ou de la couche de support est formée en un matériau en acier inoxydable.

13. Procédé de formation d'une pile à combustible à oxyde solide empilée, comprenant :
la formation d'une pluralité de couches de pile à combustible (18) selon le procédé d'une quelconque revendication précédente ; et
l'empilement de la pluralité de couches de pile à combustible le long d'un axe d'empilement.

14. Couche de pile à combustible d'une pile à combustible multicouche, comprenant :
une cathode (14) ;
une anode (12) ;
un électrolyte (16) disposé entre l'anode et la cathode ;
une couche de support (22) disposée au niveau de l'anode opposée à l'électrolyte ;
une plaque séparatrice (20) disposée au niveau de la couche de support opposée à l'anode, la couche de support étant configurée pour entrer en contact avec la cathode d'une couche de pile à combustible adjacente, la plaque séparatrice définissant une pluralité de canaux d'écoulement d'anode (30) configurés pour délivrer un combustible à travers ceux-ci et une pluralité de canaux d'écoulement de cathode (32) configurés pour délivrer un flux d'air à travers ceux-ci ;
**caractérisée en ce que** la couche de support est fixée à la plaque séparatrice par l'intermédiaire d'un procédé de frittage assisté par champ électrique ou d'un procédé de frittage par plasma d'étincelles, FAST.

15. Couche de pile à combustible selon la revendication 14, comprenant en outre une couche conductrice mince appliquée sur la couche de support ayant une épaisseur dans la plage de 5 micromètres à 1 millimètre, ladite couche conductrice mince étant constituée principalement d'éléments des groupes 7 à 12 du tableau périodique, la couche conductrice mince étant appliquée par l'un de la galvanoplastie, du dépôt par couches atomiques, de la pulvérisation cathodique ou du dépôt physique en phase vapeur.
